# EUROPEAN PATENT SPECIFICATION

(11) **EP 2 772 962 B1**
(45) Date of publication and mention of the grant of the patent: **03.01.2018**
(21) Application number: 13173498.0
(22) Date of filing: 25.06.2013
(51) Int. Cl.: H01M 2/26, H01M 2/34, H01M 10/04, H01M 10/42, H01M 2/20, B63H 21/17, H01M 2/16, H01M 2/30, H01M 10/0525

(54) **Rechargeable Battery**
Wiederaufladbare Batterie
Batterie rechargeable

(30) Priority: 27.02.2013 US 201361770168 P; 20.06.2013 US 201313923355
(43) Date of publication of application: 03.09.2014
(73) Proprietor: Samsung SDI Co., Ltd., Yongin-si, Gyeonggi-do (KR)
(72) Inventor: Kim, Duk-Jung, Yongin-si, Gyeonggi-do (KR)
(74) Representative: Gulde & Partner

(56) References cited:
- EP-A1- 2 410 594
- WO-A1-2013/107612
- US-A1- 2011 136 004

## Description

### BACKGROUND OF THE INVENTION

### (a) Field of the Invention

The present invention relates to a rechargeable battery, as e.g. disclosed in EP 2 410 594A1. More particularly, the present invention relates to a rechargeable battery with an improved safety.

### (b) Description of the Related Art

A rechargeable battery can be repeatedly charged and discharged unlike a primary battery that is incapable of being recharged. A rechargeable battery of a low capacity is used for a small portable electronic device such as a mobile phone, a laptop computer, and a camcorder, and a large capacity battery is widely used as a power source for driving a motor of a hybrid vehicle, etc.

Nowadays, a high power rechargeable battery using a non-aqueous electrolyte of a high energy density has been developed, and the high power rechargeable battery is formed as a large capacity rechargeable battery by coupling in series a plurality of rechargeable batteries to use for driving a motor of a device, for example, an electric vehicle requiring large electric power. Such a rechargeable battery may be formed in a cylindrical shape or a square shape.

When a conductive foreign material such as a nail and the like invades the rechargeable battery from the outside, an internal short-circuit may occur in the rechargeable battery. When the short-circuit occurs, a temperature in the rechargeable battery rapidly increases, thereby causing firing or explosion of the rechargeable battery.

### SUMMARY OF THE INVENTION

The present invention has been made in an effort to provide a rechargeable battery having improved safety.

A rechargeable battery according to the present invention includes a plurality of electrode assemblies, each of which may include a first electrode and a second electrode, a case housing the plurality of electrode assemblies , and a first safety member that includes a first conductive plate that is arranged between the plurality of electrode assemblies and the case, wherein a first electrode assembly of the plurality of electrode assemblies is arranged between a second electrode assembly of the plurality of electrode assemblies and the first conductive plate. The battery furthermore comprises a first contact element that electrically couples the first conductive plate to the second electrode assembly, and a second safety member that includes a second conductive plate, wherein the plurality of electrode assemblies is arranged between the conductive plates, and a second contact element that electrically couples the second conductive plate to the first electrode assembly. In order to improve safety, the second safety member is in close mechanical contact with the second electrode assembly and is electrically connected the first electrode assembly, but not to the second electrode assembly.

According to the invention, firing or explosion due to an internal short-circuit due to invasion of a conductive foreign material can be prevented, thereby improving safety of the rechargeable battery.

The solutions according to the invention can be combined as desired with and further improved by the further following embodiments that are advantageous on their own, in each case.

According to a first possible embodiment, the first contact element may comprise a connection portion that is directly attached to the second electrode assembly, the first contact element connecting the second electrode assembly to the first conductive plate.

In a further advantageous embodiment, the second electrode assembly may be arranged farther from the first conductive plate than at least another one of the plurality of electrode assemblies.

According to another possible embodiment, the first conductive plate is preferably not electrically coupled via a contact element to one of the plurality of electrode assemblies that is nearest the first conductive plate.

In case a conductive foreign material, such as a nail, penetrates the rechargeable battery and in particular the second electrode assembly and the case, the conductive foreign material may form a short circuit between the case and the second safety member and thus the electrode of the first electrode assembly and the case are interconnected so that the first electrode assembly is first discharged via the short-circuit. In addition, as the conductive foreign material invades the battery, an internal short-circuit occurs in the second electrode assembly and thus the second electrode assembly is discharged. When the invasion of the conductive foreign material reaches the first electrode assembly, an internal short-circuit occurs in the first electrode assembly and thus a residual current in the first electrode assembly is discharged.

As described, according to the present embodiment, an electrode assembly disposed in the opposite side of a portion where the conductive foreign material invades, can be discharged first due to the connection of the electrode assembly with the conductive plate.

When a plurality of electrode assemblies are installed in the case, an electrode assembly disposed in the opposite side of the portion where the conductive foreign material penetrates may ignite. This is because that the amount of current flowing through the conductive foreign material gradually increases as the invasion of the conductive foreign material is further performed. In addition, resistance generated from contact between the conductive foreign material and an active material may be very high, thereby causing a large amount of heat.

In another advantageous embodiment, the battery may comprise a second conductive plate, wherein the plurality of electrode assemblies is arranged between the conductive plates. Moreover, the battery may comprise a second contact element that electrically couples the second conductive plate to the first electrode assembly.

According to a further advantageous embodiment, the second contact element may comprise a connection portion that is directly attached to the first electrode assembly, and that connects the first electrode assembly to the second conductive plate. Independent whether the first or the second electrode assembly is penetrated first, ignition or explosion of the first and the second electrode assemblies is safely prevented.

In a further advantageous embodiment, the first electrode assembly is preferably farther from the second conductive plate than at least another one of the plurality of electrode assemblies.

According to another possible embodiment, the second conductive plate may not electrically be coupled via a contact element to one of the plurality of electrode assemblies that is nearest the second conductive plate.

In another advantageous embodiment, the rechargeable battery may further comprise a cap plate covering an opening of the case, wherein the second contact element is electrically coupled to the second conductive plate at a location near the cap plate.

According to a further advantageous embodiment, the first contact element may be electrically coupled to a negative electrode of the at least one of the plurality of electrode assemblies.

If the conductive plate is electrically connected to a negative electrode of a neighboring electrode assembly, discharging of the electrode assembly disposed in a portion where the conductive foreign material invades can be promptly induced, but a current in an electrode assembly disposed far from the invasion cannot be discharged, thereby causing ignition. However, according to the present embodiment, an electrode assembly disposed far from the portion where the invasion of the conductive foreign material occurs, is discharged first, and therefore ignition can be prevented and safety can be sufficiently assured.

In a further advantageous embodiment, the rechargeable battery may further comprise a current collecting tab coupled to the negative electrode, wherein the current collecting tab electrically couples the first contact element to the negative electrode.

According to another possible embodiment, the rechargeable battery may further comprise an insulation film between the first conductive plate and the first electrode assembly.

In another advantageous embodiment, the rechargeable battery may further comprise a third electrode assembly that is arranged adjacent to the first electrode assembly and is electrically coupled to the second conductive plate by a third contact element.

According to a further advantageous embodiment, the rechargeable battery may further comprise a fourth electrode assembly that is arranged between the third electrode assembly and the second electrode assembly and is electrically coupled to the first conductive plate by a fourth contact element.

According to another possible embodiment, the plurality of electrode assemblies may comprise a first group of the electrode assemblies that are arranged one after the other, and a second group of the electrode assemblies that are arranged one after the other, the first group being adjacent to the first conductive plate and electrically coupled to the second conductive plate and the second group being adjacent to the second conductive plate and electrically coupled to the first conductive plate. Preferably, the groups are directly coupled to the respective conductive plate. For instance, each electrode assembly is couples to the respective conductive plate by one contact element.

The first and the second conductive plates together with the first, the second, the third and / or the fourth or even further contact elements may be referred to as safety members. The contact elements may each comprise or consist of a connection protrusion that protrudes from the respective conductive plate. The connection protrusion may electrically be connected to the respective electrode assembly. The first and / or the second safety member is preferably formed as a single piece, such that the conductive plate as well as the connection protrusion, which may comprise inclined, extension, support and connection portions, are preferably integrally formed.

The invention will be described hereinafter in greater detail and in an exemplary manner using advantageous embodiments and with reference to the drawings.

The described embodiments are only possible configurations in which, however, the individual features as described above can be provided independently of one another or can be omitted in the drawings. In particular, the battery according to the invention is shown with two electrode assemblies and two conductive plates, each of which being electrically coupled to only one of the electrode assemblies, or with four electrode assemblies and two conductive plates, each of which being electrically coupled to only two of the electrode assemblies. However, the battery may comprise more than two and for instance three, five, ten or up to twenty or even up to fifty or more electrode assemblies, wherein the battery assemblies closest to the respective conductive plate are preferably not coupled the this conductive plate. Rather, at least one of the electrode assemblies that is farther away from the conductive plate than the above mentioned electrode assembly is preferably electrically couples to the conductive plate.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line II-II.
FIG. 3 is a partial perspective view of an electrode assembly, a safety member, and a current collecting member according to the first exemplary embodiment of the present invention.
FIG. 4 is a perspective view of a first safety member and a second safety member according to the first exemplary embodiment of the present invention.
FIG. 5 is a schematic diagram of a state in which a foreign material is invaded into a rechargeable battery according to the first exemplary embodiment of the present invention.
FIG. 6 is a partial perspective view of an electrode assembly, a safety member, and a current collecting member according to a second exemplary embodiment of the present invention.
FIG. 7 is a cross-sectional view of FIG. 6, taken along the line VII-VII.
FIG. 8 is a partial perspective view of an electrode assembly, a safety member, and a current collecting member according to a third exemplary embodiment of the present invention.
FIG. 9 is a perspective view of a first safety member and a second safety member according to the third exemplary embodiment of the present invention.

### DETAILED DESCRIPTION OF THE EMBODIMENTS

Like reference numerals designate like elements throughout the specification.

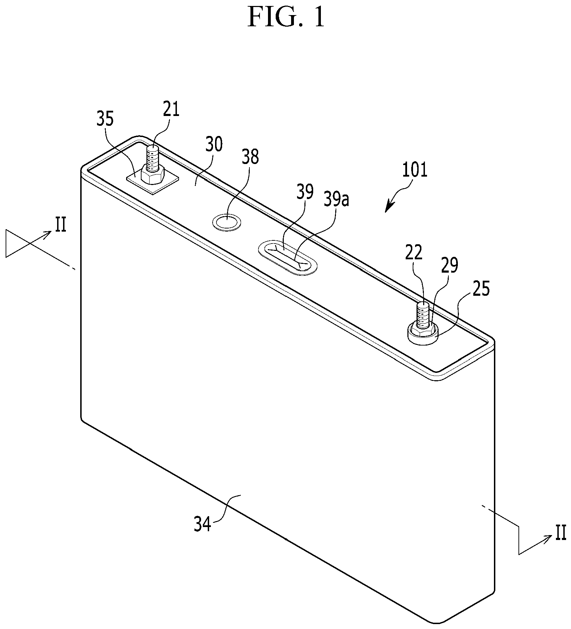

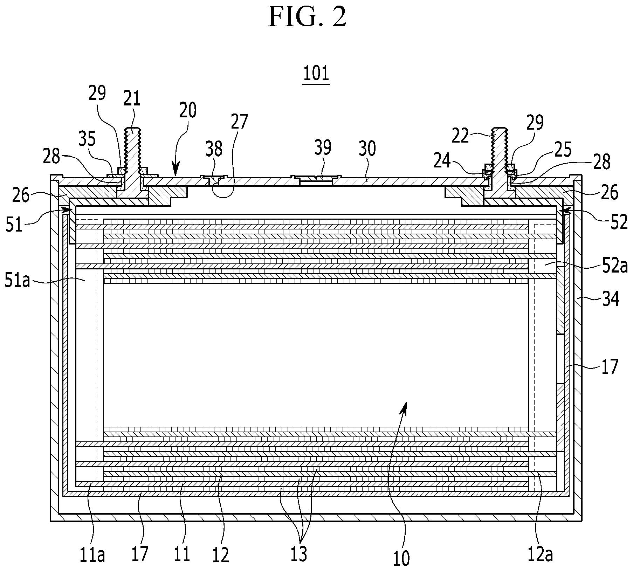

FIG. 1 is a perspective view of a rechargeable battery according to a first exemplary embodiment of the present invention, and FIG. 2 is a cross-sectional view of FIG. 1, taken along the line II-II.

Referring to FIG. 1 and FIG. 2, a rechargeable battery 101 according to the first exemplary embodiment includes a plurality of electrode assemblies 10, each preferably formed by spirally winding a second electrode 11 and a first electrode 12 with a separator 13 interposed therebetween, a case 34 housing the electrode assemblies 10 therein, and a cap assembly 20 coupled to an opening of the case 34. The first electrode may be a negative electrode and the second electrode may be a positive electrode.

The rechargeable battery 101 according to the first exemplary embodiment is exemplarily illustrated as a lithium ion rechargeable battery formed in the shape of a prism. However, the present invention is not limited thereto, and the present invention may be applied to a lithium polymer battery, a cylindrical battery, or the like.

The second electrode 11 includes a coated region that is an area where an active material is coated to a current collector that is preferably formed of a conductive thin film metal foil that is made of aluminum and the like and an uncoated region 11a that is an area not coated with the active material. The first electrode 12 includes a coated region that is an area where an active material is coated to a current collector that is preferably formed of a conductive thin film metal foil that is made of copper and the like and ann uncoated region 12a that is an area not coated with the active material.

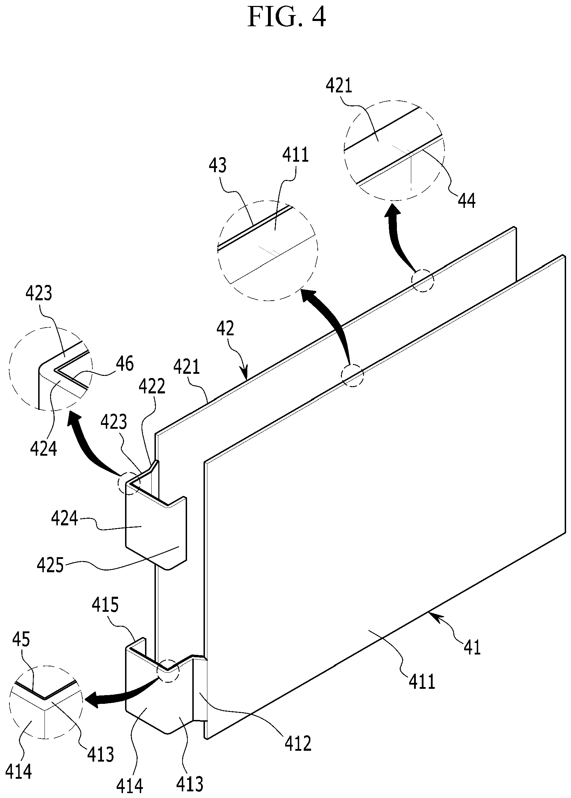

In the first exemplary embodiment, the second electrode 11 is a positive electrode connected with the case 34, and the first electrode 12 is a negative electrode connected with safety members 41 and 42 (shown in FIG. 4). However, the present invention is not limited thereto, and thus the positive electrode 11 may be the first electrode and the negative electrode 12 may be the second electrode. In addition, in the present exemplary embodiment, two electrode assemblies 10 are installed in the case 34, but the present invention is not limited thereto. Thus, a plurality of electrode assemblies 10 may be installed in the case 34.

For example, the uncoated region 11a is formed on one side end of the second electrode 11 along a length direction of the second electrode 11, and the uncoated region 12a is formed on another side end of the first electrode 12 along a length direction of the first electrode 12. In addition, the second electrode 11 and the first electrode 12 may be spirally wound after disposing a separator 13, which is an insulator, therebetween.

However, the present invention is not limited thereto, and the electrode assembly 10 may have a structure in which a plurality of first electrodes 11 and a plurality of second electrodes 12 respectively formed of sheets are alternately layered, interposing the separator 13 therebetween.

The case 34 of the exemplary embodiment has an approximately cuboid shape, and is provided with an opening that opens to one face thereof. An insulating encapsulation 17 for insulation is installed between the case 34 and the electrode assemblies 10. The insulating encapsulation 17 has a film shape and the top of the insulating encapsulation 17 is opened.

The cap assembly 20 includes a cap plate 30 covering the opening of the case 34, a second terminal 21 which protrudes outwardly from the cap plate 30 and is electrically connected with the second electrode 11 and a first terminal 22 which protrudes outwardly from the cap plate and is electrically connected with the first electrode 12, and a vent member 39 with a notch 39a so as to fracture depending on set internal pressure. The first terminal 22 may be a negative terminal and the second terminal 21 may be a positive terminal.

The cap plate 30 is formed by a thin sheet and an electrolyte injection hole 27 for injecting an electrolyte us formed at one side and a sealing plug 38 is installed at the electrolyte injection hole 27.

A lower gasket 25 is installed between the cap plate 30 and the terminals 21 and 22 to seal the space between the cap plate 30 and the terminals 21 and 22.

The lower gasket 28 fits in a terminal hole and is closely disposed on the bottom of the cap plate 30. The terminals 21 and 22 have a cylindrical shape. Nuts 29 supporting the terminals 21 and 22 on the top are installed at the terminals 21 and 22 and threads are formed on the outer peripheries of the terminals so that the nuts 29 are fastened to the outer peripheries of the terminals 21 and 22.

A connection plate 35 is inserted into the second terminal 21. Therefore, the connection plate 35 is installed between the nut 29 and the cap plate 30. The connection plate 35 serves to electrically connect the second terminal 21 and the cap plate 30. Accordingly, the cap plate 30 and the case 34 are electrically connected with the second electrode 11.

An upper gasket 25 is installed into the first terminal 22. Therefore, the upper gasket 25 is disposed on the lower gasket 28 to contact the top of the cap plate 30. The upper gasket 25 serves to insulate the first terminal 22 and the cap plate 30. A washer 24 buffering the fastening force between the nut 29 and the upper gasket 25 is installed on the upper gasket 25. A lower insulation member 26 that insulates the cap plate 30 and the terminals 21 and 22 is provided in a lower portion of each of the terminals 21 and 22.

A current collecting member 51 is electrically connected with the second electrode 11 and is attached to the second terminal 21, e.g. by welding. The second terminal 21 and the current collecting member 51 are preferably inserted into grooves formed in the bottom side of the lower insulation member 26. The current collecting member 51 is provided with a plurality of tabs 51a protruding downward and the plurality of tabs 51a are attached to the respective uncoated regions 11a, e.g. by welding.

A current collecting member 52 is electrically connected with the first terminal 22 and is attached to the first electrode 12, e.g. by welding. The first terminal 22 and the current collecting member 52 are preferably fitted into grooves formed in the bottom side of the lower insulation member 26. The current collecting member 52 is provided with a plurality of tabs protruding downward and the plurality of tabs are attached to the respective uncoated regions 12a, e.g. by welding.

Safety members electrically connected to at least one of the electrodes are installed on external sides of the plurality of electrode assemblies 10.

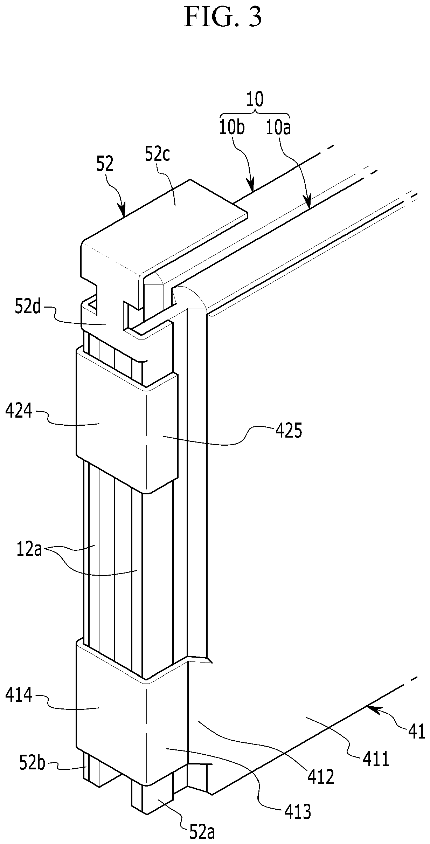

FIG. 3 is a partial perspective view of the electrode assembly, the safety members 41, 42, and a current collecting member 52 according to the first exemplary embodiment of the present invention, and FIG. 4 is a perspective view of a first safety member 41 and a second safety member 42.

Referring to FIG. 3 and FIG. 4, the first safety member 41 is preferably disposed on a first external side of the plurality of electrode assemblies 10. Electrode assemblies 10a, 10b of the plurality of electrode assemblies 10 may be arranged in a layered manner, i.e. one behind the other. A second safety member 42 may be provided that is disposed in a second external side of the plurality of electrode assemblies 10. The first and the second external sides are preferable opposite sides of the plurality of electrode assemblies 10.

In addition, the first electrode assembly 10a can be disposed to face a first inner side of the case 34 at a flat surface thereof and the second electrode assembly 10b can be disposed to face a second inner side of the case 34 at a flat surface thereof. Here, the first inner side of the case 34 and the flat surface of the first electrode assembly 10a are disposed adjacent to each other, and the second inner side of the case 34 and the flat surface of the second electrode assembly 10b are disposed adjacent to each other. The first safety member 41 is at least sectionwise disposed between the first inner side of the case 34 and the first electrode assembly 10a, and the second safety member 42 is at least sectionwise disposed between the second inner side of the case 34 and the second electrode assembly 10b.

The current collecting member 52 connected to the first electrode 12 includes an upper plate 52c connected with a terminal, a connection plate 52d that extends downward from the upper plate 52c, and a plurality of tabs extending in parallel with the uncoated regions 12a. The current collecting member 52 according to the present exemplary embodiment includes two tabs so as to be connected with two electrode assemblies 10, namely a first tab 52a attached to the first electrode assembly 10a and a second tab 52b attached to the second electrode assembly 10b.

The first safety member 41 is disposed to mechanically contact the external surface of the first electrode assembly 10a. The first safety member 41 includes a first side plate 411, which may also be designated as a first conductive plate, attached to a flat surface that faces the outside in the first electrode assembly 10a and a connection protrusion connected to and protruding from the side plate 411 and fixed to the second tab 52b. In the present exemplary embodiment, the flat surface implies a plane side, excluding upper and lower bent portions in the external circumferential surface.

The side plate 411 and the connection protrusion are made of electrically conductive metal, such as copper, stainless steel, and the like. An insulation film 43 is attached to a side of the side plate 411, contacting the first electrode assembly 10a. The insulation film 43 is made of a polymer material, and prevents direct electrical contact between the side plate 411 and the first electrode assembly 10a.

In addition, the connection protrusion includes a connection portion 415 fixed to the uncoated region 12a, an inclined portion 412 extending with a slope from the side plate 411, an extension portion 413 extending toward a side end of the first electrode assembly 10a, and a support portion 414 extending from the extension portion 413 and toward the connection portion 415.

Here, the connection portion 415 is connected to the side plate 411 via the inclined portion 412, the extension portion 413, and the support portion 414. In the present exemplary embodiment, the side plate 411 and the connection protrusion are integrally formed, and the connection protrusion is for instance connected with a first lower side end of the side plate 411.

The inclined portion 412 supports the uncoated region 12a to prevent the uncoated region 12a from moving due to an external impact or vibration, and the support portion 414 extends from a side end of the first electrode assembly 10a to a side end of the second electrode assembly 10b to interconnect the extension portion 413 and the connection portion 415. An insulation film 45 is provided in the inclined portion 412, the extension portion 413, and the support portion 414 for insulation from the first electrode assembly 10a and the first tab 52a. However, the insulation film 45 is not provided in the connection portion 415.

The connection portion 415 directly electrically contacts the second tab 52b and may be welded thereto so that being electrically connected to the uncoated region 12a of the second electrode assembly 10b. In the present exemplary embodiment, the connection portion 415 is welded to the second tab 52b, but the present invention is not limited thereto, and thus the connection portion 415 may be directly attached to the uncoated region 12a of the second electrode assembly 10b.

Accordingly, the first safety member 41 is further closely attached to the first electrode assembly 10a but has an electric connection with the second electrode assembly 10b.

The second safety member 42 mechanically contacts the external surface of the second electrode assembly 10b. The second safety member 42 includes a second side plate 421, which may also be designated as a conductive plate, attached to a flat surface of the second electrode assembly 10b, the flat surface facing outside, and a connection protrusion connected to and protrudes from the side plate 421 and electrically connected with the uncoated region 12a of the first electrode assembly 10a.

The side plate 421 and the connection protrusion are e.g. made of an electrically conductive metal , such as copper, stainless steel, and the like. An insulation film 44 is attached to a side of the side plate 421, contacting the second electrode assembly 10b. The insulation film 44 is e.g. made of a polymer material, and prevents the side plate 421 from directly contacting the second electrode assembly 10b.

The connection protrusion includes a connection portion 421 fixed to the uncoated region 12a, an inclined portion 422 extending with a slope from the side plate 421, an extension portion 423 extending toward a side end of the second electrode assembly 10b, and a support portion 424 extending from the extension portion 413 and toward the connection portion 425.

Here, the connection portion 425 is connected to the side plate via the connection portion 425, the inclined portion 422, the extension portion 423, and the support portion 424. In the present exemplary embodiment, the side plate 421 and the connection protrusion are integrally formed, and the connection protrusion is e.g. connected with one upper end side of the side plate 421.

The inclined portion 422 supports the uncoated region 12a to prevent the uncoated region 12a from moving due to an external impact or vibration, and the support portion 424 is extended to a side end of the first electrode assembly 10a from a side end of the second electrode assembly 10b to connect the extension portion 423 and the connection portion 425. An insulation film 46 is provided in the inclined portion 422, the extension portion 423, and the support portion 424 for insulation from the second electrode assembly 10b and the second tab 52b. However, the insulation film 46 is not provided in the connection portion 425.

The connection portion 425 is welded to the first tab 52a and thus electrically connected to the uncoated region 12a of the first electrode assembly 10a. Accordingly, although being in close mechanical contact with the second electrode assembly 10b, the second safety member 42 is electrically connected the first electrode assembly 10a, but not to the second electrode assembly 10b.

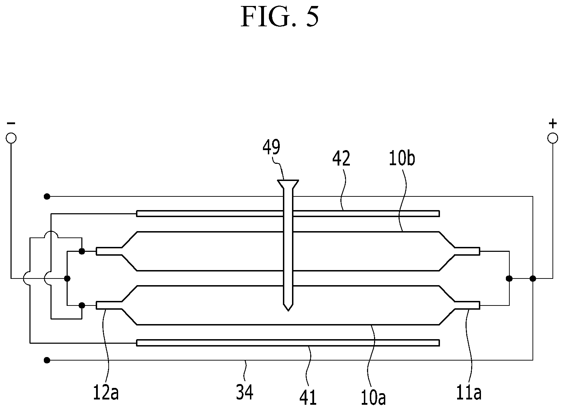

FIG. 5 is a schematic diagram of a state that a foreign material has invaded into the rechargeable battery according to the first exemplary embodiment of the present invention.

As shown in FIG. 5, a conductive foreign material 49, such as a nail, penetrates the rechargeable battery and in particular the second electrode assembly 10b and the case 34. The conductive foreign material 49 forms a short circuit between the case 34 and the second safety member 42 and thus the electrode 12, e.g. the negative electrode, of the first electrode assembly 10a and the case 34 are interconnected so that the first electrode assembly 10a is first discharged via the short-circuit. In addition, as the conductive foreign material 49 invades the battery, an internal short-circuit occurs in the second electrode assembly 10b and thus the second electrode assembly 10b is discharged. When the invasion of the conductive foreign material 49 reaches the first electrode assembly 10a, an internal short-circuit occurs in the first electrode assembly 10a and thus a residual current in the first electrode assembly 10a is discharged.

As described, according to the present exemplary embodiment, an electrode assembly disposed in the opposite side of a portion where the conductive foreign material 49 is invaded, can be discharged first due to the connection of the electrode assembly with the safety member.

When a plurality of electrode assemblies 10 are installed in the case 34, an electrode assembly disposed in the opposite side of the portion where the conductive foreign material 49 penetrates may ignite. This is because that the amount of current flowing through the conductive foreign material 49 gradually increases as the invasion of the conductive foreign material 49 is further performed. In addition, resistance generated from contact between the conductive foreign material 49 and a negative active material is very high, thereby causing a large amount of heat.

Meanwhile, when the safety member is electrically connected with a negative electrode of a neighboring electrode assembly, discharging of the electrode assembly disposed in a portion where the conductive foreign material 49 invades can be promptly induced, but a current in an electrode assembly disposed far from the invasion cannot be discharged, thereby causing ignition.

However, according to the present exemplary embodiment, an electrode assembly disposed far from the portion where the invasion of the conductive foreign material 49 occurs, is discharged first, and therefore ignition can be prevented and safety can be sufficiently assured.

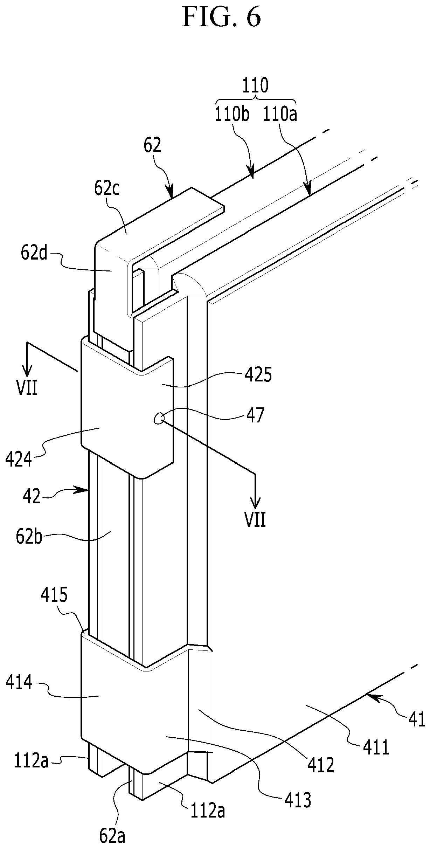

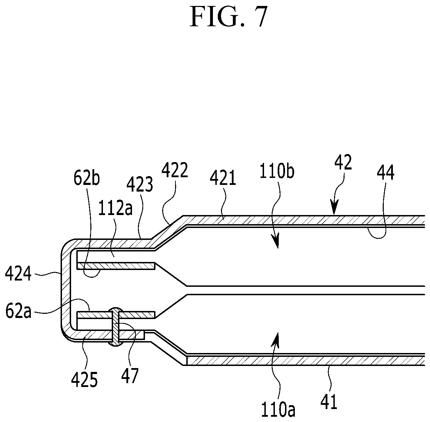

FIG. 6 is a partial perspective view of an electrode assembly, a safety member, and a current collecting member according to a second exemplary embodiment of the present invention, and FIG. 7 is a cross-sectional view of FIG. 6, taken along the line VII-VII.

Referring to FIG. 6 and FIG. 7, a rechargeable battery according to the present exemplary embodiment is the same as the rechargeable battery 101 according to the first exemplary embodiment, except for a coupling structure between a safety member and a negative uncoated region 12a, and therefore the duplicated description for the same structure is omitted.

The rechargeable battery according to the present exemplary embodiment includes two electrode assemblies 110, and a current collecting member is coupled to a uncoated region, e.g. a positive uncoated region, of each of the electrode assemblies 110 and a current collecting member 62 is coupled to a uncoated region 112a, e.g. a negative uncoated region, of each of the electrode assemblies 110. The current collecting members preferably have the same structure.

The current collecting member 62 includes an upper plate 62c connected with a first terminal of the battery, which may be a negative terminal, a connection plate 62d extends downward from the upper plate 62c, and a plurality of tabs extend in parallel with the uncoated region 112a from the connection plate 62d. The current collecting member 62 includes two tabs for connection with the two electrode assemblies 110. The tabs include a first tab 62a attached to the first electrode assembly 110a and a second tab 62b attached to the second electrode assembly 110b. Here, the first tab 62a and the second tab 62b are disposed to face each other between the uncoated regions 112a.

The first safety member 41 is disposed to contact an external surface of the first electrode assembly 110a. The first safety member 41 includes the side plate 411 , which may also be referred to as first conductive plate 411, attached to a flat surface that faces the outside in the first electrode assembly 110a, and a connection protrusion formed in the side plate 411 and is connected with the uncoated region 112a of the second electrode assembly 110b.

In addition, the connection protrusion includes the connection portion 415 fixed to the uncoated region 112a, the inclined portion 412 that extends with a slope from the side plate 411, the extension portion 413 that extends from the inclined portion 412 and then extends to a side end of the first electrode assembly 110a, and the support portion 414 that extends from the extension portion 413 and then extends toward the connection portion 415. Here, the connection portion 415 is connected to the side plate 411 via the inclined portion 412, the extension portion 413, and the support portion 414.

The connection portion 415 is fixed to the uncoated region 11a of the second electrode assembly 110b, and therefore the uncoated region 112a is disposed between the connection portion 415 and the second tab 62b. The connection portion 415 is fixed to the uncoated region 112a by a fixing member 47 that penetrates the uncoated region 112a and the connection portion 415. In the present exemplary embodiment, the fixing member 47 is formed of a rivet, and the rivet integrally fixes the connection portion 415, the uncoated region 112a, and the second tab 62b by penetrating the connection portion 415, the uncoated region 112a, and the second tab 62b.

As in the present exemplary embodiment, when the fixing member 47 is integrally fixed to the connection portion 415, the uncoated region 112a, and the second tab 62b by penetrating them, a contact failure due to an external vibration or impact can be prevented.

The second safety member 42 contacts the external surface of the second electrode assembly 110b. The second safety member 42 includes a side plate 421 attached to a flat surface that faces toward the outside in the second electrode assembly 110b, and a connection protrusion that is connected to the side plate 421 and thus to the uncoated region 112a of the first electrode assembly 110a.

In addition, the connection protrusion includes a connection portion 425 fixed to the uncoated region 12a, an inclined portion 422 that extends with a slope from the side plate 421, an extension portion 423 that extends from the inclined portion 422 and toward a side end of the second electrode assembly 110b, and a support portion 424 that extends from the extension portion 423 and then toward the connection portion 424. Here, the connection portion 425 is connected to the side plate 421 through the inclined portion 422, the extension portion 423, and the support portion 424.

The connection portion 425 is fixed to the uncoated region 112a of the first electrode assembly 110a, and therefore the uncoated region 112a is disposed between the connection portion 425 and the first tab 62a. The connection portion 425 is fixed to the uncoated region 112a by the fixing member 47 penetrating the uncoated region 112a and the connection portion 415. In the present exemplary embodiment, the fixing member 47 is formed of a rivet, and the rivet integrally fixes the connection portion 425, the uncoated region 112a, and the first tab 62a by penetrating them.

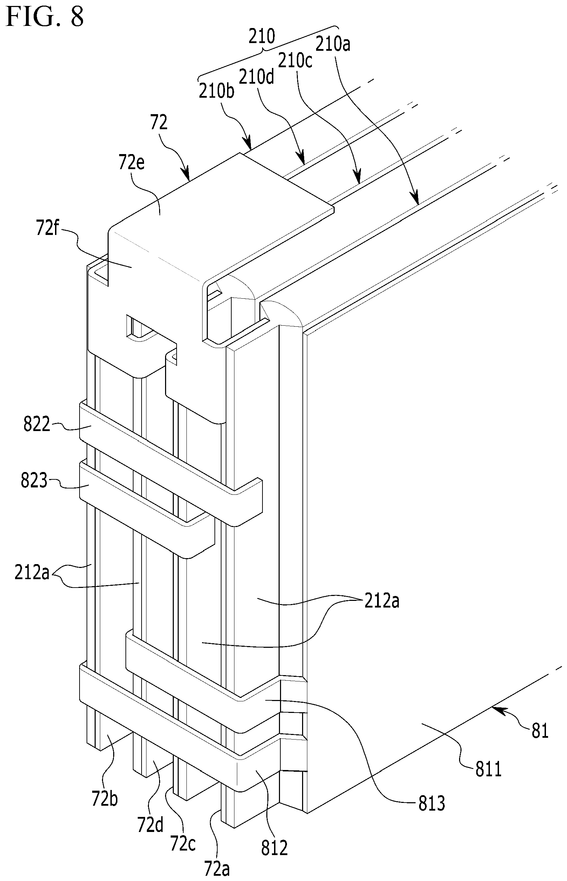

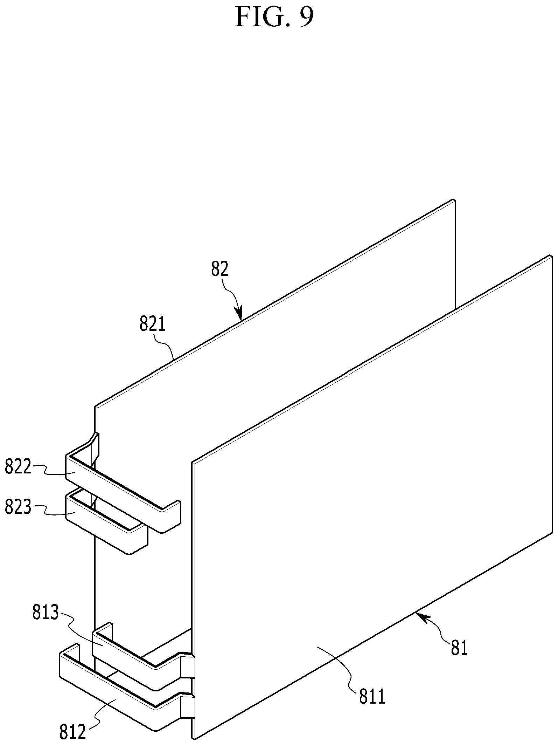

FIG. 8 is a partial perspective view of an electrode assembly, a safety member, and a current collecting member according to a third exemplary embodiment of the present invention, and FIG. 9 is a perspective view of a first safety member and a second safety member according to the third exemplary embodiment of the present invention.

Referring to FIG. 8 and FIG. 9, a rechargeable battery according to the present exemplary embodiment is the same as the rechargeable battery of the first exemplary embodiment, excluding the number of electrode assemblies and structures of safety members and current collecting members, and therefore the duplicated description for the same structure is omitted.

The rechargeable battery according to the present exemplary embodiment includes four electrode assemblies 210, and the four electrode assemblies 210 are layered in parallel with each other, i.e. are arranged in parallel to each other and one after the other. A first electrode assembly 210a is disposed on one side end of the electrode assemblies 210, and a second electrode assembly 210b is disposed on the other side end of the electrode assemblies 210. A third electrode assembly 210c is disposed adjacent to the first electrode assembly 210a and between the first and the second electrode assemblies 210a, 210b, and the fourth electrode assembly 210d is disposed between the second and the third electrode assemblies 210b, 210c. Accordingly, the first electrode assembly 210a, the third electrode assembly 210c, the fourth electrode assembly 210d, and the second electrode assembly 210b are sequentially disposed.

A current collecting member is coupled to an uncoated region, e.g. a positive uncoated region, of each electrode assembly 210 and a current collecting member 72 is coupled to another uncoated region 212a, e.g. a negative uncoated region, of each electrode assembly 210. The current collecting members preferably have the same structure.

The current collecting member 72 includes an upper plate 72e connected with a first, e.g. negative terminal, a connection plate 72f that extends downward from the upper plate 72e, and a plurality of tabs that extend in parallel with the uncoated region 12a in the connection plate 72f. The current collecting member 72 includes four tabs so as to be connected to the four electrode assemblies 210. The tabs include a first tab 72a attached to the first electrode assembly 210a, a second tab 72b attached to the second electrode assembly 210b, a third tab 72c attached to the third electrode assembly 210c, and a fourth tab 72d attached to the fourth electrode assembly 210d. The tabs 72a-d are welded to the uncoated regions 212a while in a state of being disposed in parallel with the uncoated regions 212a.

Since the first safety member 81 is attached to the external side of the first electrode assembly 210a, the first safety member 81 includes a side plate 811 attached to a flat surface that faces the outside in the first electrode assembly 210a and connection protrusions 812 and 813 connected to the side plate 811 and then attached to the uncoated regions 12a of the second and fourth electrode assemblies 210b and 210d. Here, an insulation film is provided in the side plate 811.

The first safety member 81 includes two connection protrusions 812 and 813, and therefore one of the two connection protrusions 812 and 813 is joined to the uncoated region 212a of the second electrode assembly 210b and the other is joined to the uncoated region 212a of the fourth electrode assembly 210d. Accordingly, the first safety assembly 81 is electrically connected with the second electrode assemble 210b and the fourth electrode assembly 210d that are disposed in the opposite side.

Meanwhile, the second safety member 82 is provided in the external side of the second electrode assembly 210b, and therefore the second safety member 82 includes a side plate 81 attached to a flat surface that faces the outside in the second electrode assembly 210b and connection protrusions 822 and 823 connected to the side plate 821 and attached to the uncoated regions 12a of the first and third electrode assemblies 210a and 210c. Here, an insulation film is provided in the side plate 811.

The second safety member 82 includes two connection protrusions 822 and 823, and therefore one of the two connection protrusions 822 and 823 is joined to the uncoated region 211a of the first electrode assembly 210a and the other is connected to the uncoated region 212a of the third electrode assembly 210c. Accordingly, the second safety member 82 is electrically connected with the first electrode assembly 210a and the third electrode assembly 210c that are disposed in the opposite side.

As described, according to the present exemplary embodiment, two electrode assemblies are electrically connected to one safety member, and therefore a current in the two electrode assemblies can be discharged when a conductive foreign material invades the battery and thus contacts the safety member. In addition, a current in electrode assemblies disposed in the opposite side of the portion where the conductive foreign material is invaded can also be discharged, thereby improving safety.

## Claims

1. A rechargeable battery (101) comprising:
a plurality of electrode assemblies (10),
a case (34) housing the plurality of electrode assemblies (10), and
a first safety member (41) that includes a first conductive plate (411) that is arranged between the plurality of electrode assemblies (10) and the case (34), wherein a first electrode assembly (10a) of the plurality of electrode assemblies (10) is arranged between a second electrode assembly (10b) of the plurality of electrode assemblies (10) and the first conductive plate (411), wherein the rechargeable battery (101) further comprises
a first contact element that electrically couples the first conductive plate (411) to the second electrode assembly (10b), wherein
the rechargeable battery (101) further comprises
a second safety member (42) that includes a second conductive plate (421), wherein the plurality of electrode assemblies (10) is arranged between the conductive plates (411, 421), and
a second contact element that electrically couples the second conductive plate (421) to the first electrode assembly (10a),
**characterized in that**
the second safety member (42) is in close mechanical contact with the second electrode assembly (10b) and is electrically connected the first electrode assembly (10a), but not to the second electrode assembly (10b).

2. The rechargeable battery (101) of claim 1, wherein the first contact element comprises a connection portion (415) that is directly attached to the second electrode assembly (10b), the first contact element connecting the second electrode assembly (10b) to the first conductive plate (411).

3. The rechargeable battery (101) of claim 1 or 2, wherein the second electrode assembly (10b) is farther from the first conductive plate (411) than at least another one of the plurality of electrode assemblies (10).

4. The rechargeable battery (101) of any of claims 1 to 3, wherein the first conductive plate (411) is not electrically coupled via a contact element to one of the plurality of electrode assemblies (10) that is nearest the first conductive plate (411).

5. The rechargeable battery (101) of any of claims 1 to 4, wherein the second contact element comprises a connection portion (425) that is directly attached to the first electrode assembly (10a), the second contact element connecting the first electrode assembly (10a) to the second conductive plate (421).

6. The rechargeable battery (101) of any of claims 1 to 5, wherein the first electrode assembly (10a) is farther from the second conductive plate (421) than at least another one of the plurality of electrode assemblies (10).

7. The rechargeable battery (101) of any of claims 1 to 6, wherein the second conductive plate (421) is not electrically coupled via a contact element to one of the plurality of electrode assemblies (10) that is nearest the second conductive plate (421).

8. The rechargeable battery (101) of any of claims 1 to 7, wherein the first contact element is electrically coupled to a negative electrode (12a) of the at least one of the plurality of electrode assemblies (10b).

9. The rechargeable battery (101) of claim 8, further comprising a current collecting tab (62b) coupled to the negative electrode (12a), wherein the current collecting tab (62b) electrically couples the first contact element to the negative electrode (12a).

10. The rechargeable battery (101) of any of claims 1 to 9, further comprising an insulation film (43) between the first conductive plate (411) and the first electrode assembly (10a).

11. The rechargeable battery (101) of any of claims 1 to 10, further comprising a third electrode assembly (210c) that is arranged adjacent to the first electrode assembly (210a) and is electrically coupled to the second conductive plate (821) by yet another connection protrusion.

12. The rechargeable battery (101) of claim 11, further comprising a fourth electrode assembly (210d) that is arranged between the third electrode assembly (210c) and the second electrode assembly (210b) and is electrically coupled to the first conductive plate (811) by still another connection protrusion.

13. The rechargeable battery (101) of any of claims 1 to 12, wherein the plurality of electrode assemblies (10) comprises a first group of the electrode assemblies (210a, 210c) that are arranged one after the other, and a second group of the electrode assemblies (210b, 210d) that are arranged one after the other, the first group being adjacent to the first conductive plate (811) and electrically coupled to the second conductive plate (821) and the second group being adjacent to the second conductive plate (821) and electrically coupled to the first conductive plate (811).

## Patentansprüche

1. Eine wiederaufladbare Batterie (101), aufweisend:
eine Vielzahl von Elektrodenanordnungen (10),
ein Gehäuse (34), das die Vielzahl der Elektrodenanordnungen (10) aufnimmt, und ein erstes Sicherheitselement (41), das eine erste leitfähige Platte (411), die zwischen der Vielzahl der Elektrodenanordnungen (10) und dem Gehäuse (34) angeordnet ist, aufweist, wobei eine erste Elektrodenanordnung (10a) der Vielzahl der Elektrodenanordnungen (10) zwischen einer zweiten Elektrodenanordnung (10b) der Vielzahl der Elektrodenanordnungen (10) und der ersten leitfähigen Platte (411) angeordnet ist, wobei die wiederaufladbare Batterie (101) ferner aufweist ein erstes Kontaktelement, das die erste leitfähige Platte (411) mit der zweiten Elektrodenanordnung (10b) elektrisch koppelt, wobei
die wiederaufladbare Batterie (101) ferner aufweist
ein zweites Sicherheitselement (42), das eine zweite leitfähige Platte (421) aufweist, wobei die Vielzahl der Elektrodenanordnungen (10) zwischen den leitfähigen Platten (411, 421) angeordnet ist, und
ein zweites Kontaktelement, das die zweite leitfähige Platte (421) mit der ersten Elektrodenanordnung (10a) elektrisch koppelt,
**dadurch gekennzeichnet, dass**
das zweite Sicherheitselement (42) mit der zweiten Elektrodenanordnung (10b) in engem mechanischem Kontakt steht und mit der ersten Elektrodenanordnung (10a), nicht jedoch mit der zweiten Elektrodenanordnung (10b), elektrisch gekoppelt ist.

2. Die wiederaufladbare Batterie (101) nach Anspruch 1, wobei das erste Kontaktelement einen Verbindungsabschnitt (415), der direkt an der zweiten Elektrodenanordnung (10b) befestigt ist, aufweist, wobei das erste Kontaktelement die zweite Elektrodenanordnung (10b) mit der ersten leitfähigen Platte (411) verbindet.

3. Die wiederaufladbare Batterie (101) nach Anspruch 1 oder 2, wobei die zweite Elektrodenanordnung (10b) weiter von der ersten leitfähigen Platte (411) entfernt ist als zumindest eine andere aus der Vielzahl der Elektrodenanordnungen (10).

4. Die wiederaufladbare Batterie (101) nach einem der Ansprüche 1 bis 3, wobei die erste leitfähige Platte (411) nicht über ein Kontaktelement mit einer aus der Vielzahl der Elektrodenanordnungen (10), die der ersten leitfähigen Platte (411) am nächsten ist, elektrisch gekoppelt ist.

5. Die wiederaufladbare Batterie (101) nach einem der Ansprüche 1 bis 4, wobei das zweite Kontaktelement einen Verbindungsabschnitt (425), der direkt an der ersten Elektrodenanordnung (10a) befestigt ist, aufweist, wobei das zweite Kontaktelement die erste Elektrodenanordnung (10a) mit der zweiten leitfähigen Platte (421) verbindet.

6. Die wiederaufladbare Batterie (101) nach einem der Ansprüche 1 bis 5, wobei die erste Elektrodenanordnung (10a) weiter von der zweiten leitfähigen Platte (421) entfernt ist als zumindest eine weitere aus der Vielzahl der Elektrodenanordnungen (10).

7. Die wiederaufladbare Batterie (101) nach einem der Ansprüche 1 bis 6, wobei die zweite leifähige Platte (421) nicht über ein Kontaktelement mit einer aus der Vielzahl der Elektrodenanordnungen (10), die der zweiten leitfähigen Platte (421) am nächsten ist, elektrisch gekoppelt ist.

8. Die wiederaufladbare Batterie (101) nach einem der Ansprüche 1 bis 7, wobei das erste Kontaktelement mit einer negativen Elektrode (12a) der zumindest einen aus der Vielzahl der Elektrodenanordnungen (10b) elektrisch gekoppelt ist.

9. Die wiederaufladbare Batterie (101) nach Anspruch 8, ferner aufweisend einen Stromsammeistreifen (62b), der mit der negativen Elektrode (12a) gekoppelt ist, wobei der Stromsammeistreifen (62b) das erste Kontaktelement mit der negativen Elektrode (12a) elektrisch koppelt.

10. Die wiederaufladbare Batterie (101) nach einem der Ansprüche 1 bis 9, ferner aufweisend einen Isolationsfilm (43) zwischen der ersten leitfähigen Platte (411) und der ersten Elektrodenanordnung (10a).

11. Die wiederaufladbare Batterie (101) nach einem der Ansprüche 1 bis 10, ferner aufweisend eine dritte Elektrodenanordnung (210c), die benachbart zur ersten Elektrodenanordnung (210a) angeordnet ist und durch noch einen weiteren Verbindungsvorsprung mit der zweiten leitfähigen Platte (821) elektrisch gekoppelt ist.

12. Die wiederaufladbare Batterie (101) nach Anspruch 11, ferner aufweisend eine vierte Elektrodenanordnung (210d), die zwischen der dritten Elektrodenanordnung (210c) und der zweiten Elektrodenanordnung (210b) angeordnet ist und durch noch einen weiteren Verbindungsvorsprung mit der ersten leitfähigen Platte (811) elektrisch gekoppelt ist.

13. Die wiederaufladbare Batterie (101) nach einem der Ansprüche 1 bis 12, wobei die Vielzahl der Elektrodenanordnungen (10) eine erste Gruppe von Elektrodenanordnungen (210a, 210c), die nacheinander angeordnet sind, und eine zweite Gruppe von Elektrodenanordnungen (210b, 210d), die nacheinander angeordnet sind, aufweist, wobei die erste Gruppe benachbart zur ersten leitfähigen Platte (811) ist und mit der zweiten leitfähigen Platte (821) elektrisch gekoppelt ist und die zweite Gruppe benachbart zur zweiten leitfähigen Platte (821) ist und mit der ersten leitfähigen Platte (811) elektrisch gekoppelt ist.

## Revendications

1. Batterie rechargeable (101) comprenant :
une pluralité d'ensembles d'électrodes (10),
un boîtier (34) recevant la pluralité d'ensembles d'électrodes (10), et
un premier élément de sécurité (41) qui comporte une première plaque conductrice (411) qui est agencée entre la pluralité d'ensembles d'électrodes (10) et le boîtier (34), où un premier ensemble d'électrodes (10a) de la pluralité d'ensembles d'électrodes (10) est agencé entre un deuxième ensemble d'électrodes (10b) de la pluralité d'ensembles d'électrodes (10) et la première plaque conductrice (411), où la batterie rechargeable (101) comprend en outre :
un premier élément de contact qui couple électriquement la première plaque conductrice (411) au deuxième ensemble d'électrodes (10b), où
la batterie rechargeable (101) comprend en outre :
un deuxième élément de sécurité (42) qui comporte une deuxième plaque conductrice (421), où la pluralité d'ensembles d'électrodes (10) est agencée entre les plaques conductrices (411, 421), et
un deuxième élément de contact qui couple électriquement la deuxième plaque conductrice (421) au premier ensemble d'électrodes (10a),
**caractérisée en ce que** :
le deuxième élément de sécurité (42) est en contact mécanique étroit avec le deuxième ensemble d'électrodes (10b) et est relié électriquement au premier ensemble d'électrodes (10a), mais pas au deuxième ensemble d'électrodes (10b).

2. Batterie rechargeable (101) de la revendication 1, dans laquelle le premier élément de contact comprend une partie de liaison (415) qui est directement attachée au deuxième ensemble d'électrodes (10b), le premier élément de contact reliant le deuxième ensemble d'électrodes (10b) à la première plaque conductrice (411).

3. Batterie rechargeable (101) de la revendication 1 ou 2, dans laquelle le deuxième ensemble d'électrodes (10b) est plus éloigné de la première plaque conductrice (411) qu'au moins un autre de la pluralité d'ensembles d'électrodes (10).

4. Batterie rechargeable (101) de l'une des revendications 1 à 3, dans laquelle la première plaque conductrice (411) n'est pas couplée électriquement par l'intermédiaire d'un élément de contact à l'un de la pluralité d'ensembles d'électrodes (10) qui est plus proche de la première plaque conductrice (411).

5. Batterie rechargeable (101) de l'une des revendications 1 à 4, dans laquelle le deuxième élément de contact comprend une partie de liaison (425) qui est directement attachée au premier ensemble d'électrodes (10a), le deuxième élément de contact reliant le premier ensemble d'électrodes (10a) à la deuxième plaque conductrice (421) .

6. Batterie rechargeable (101) de l'une des revendications 1 à 5, dans laquelle le premier ensemble d'électrodes (10a) est plus éloigné de la deuxième plaque conductrice (421) qu'au moins un autre ensemble de la pluralité d'ensembles d'électrodes (10).

7. Batterie rechargeable (101) de l'une des revendications 1 à 6, dans laquelle la deuxième plaque conductrice (421) n'est pas couplée électriquement par l'intermédiaire d'un élément de contact à l'un de la pluralité d'ensembles d'électrodes (10) qui est plus proche de la deuxième plaque conductrice (421).

8. Batterie rechargeable (101) de l'une des revendications 1 à 7, dans laquelle le premier élément de contact est couplé électriquement à une électrode négative (12a) de l'au moins un ensemble de la pluralité d'ensembles d'électrodes (10b).

9. Batterie rechargeable (101) de la revendication 8, comprenant en outre une languette collectrice de courant (62b) couplée à l'électrode négative (12a), dans laquelle la languette collectrice de courant (62b) couple électriquement le premier élément de contact à l'électrode négative (12a).

10. Batterie rechargeable (101) de l'une des revendications 1 à 9, comprenant en outre un film d'isolation (43) entre la première plaque conductrice (411) et le premier ensemble d'électrodes (10a).

11. Batterie rechargeable (101) de l'une des revendications 1 à 10, comprenant en outre un troisième ensemble d'électrodes (210c) qui est agencé de manière adjacente par rapport au premier ensemble d'électrodes (210a) et est couplé électriquement à la deuxième plaque conductrice (821) par encore une autre saillie de liaison.

12. Batterie rechargeable (101) de la revendication 11, comprenant en outre un quatrième ensemble d'électrodes (210d) qui est agencé entre le troisième ensemble d'électrodes (210c) et le deuxième ensemble d'électrodes (210b) et est couplé électriquement à la première plaque conductrice (811) par encore une autre saillie de liaison.

13. Batterie rechargeable (101) de l'une des revendications 1 à 12, dans laquelle la pluralité d'ensembles d'électrodes (10) comprend un premier groupe des ensembles d'électrodes (210a, 210c) qui sont agencés l'un après l'autre, et un deuxième groupe des ensembles d'électrodes (210b, 210d) qui sont agencés l'un après l'autre, le premier groupe étant adjacent à la première plaque conductrice (811) et couplé électriquement à la deuxième plaque conductrice (821) et le deuxième groupe étant adjacent à la deuxième plaque conductrice (821) et couplé électriquement à la première plaque conductrice (811).
